Europäisches Patentamt

European Patent Office

Office européen des brevets

(11) Publication number: **0 071 377**
**B1**

(12) **EUROPEAN PATENT SPECIFICATION**

(45) Date of publication of patent specification: **18.03.87**

(21) Application number: **82303767.6**

(22) Date of filing: **19.07.82**

(51) Int. Cl.⁴: **G 06 K 17/00**

(54) **Optical data storage.**

(30) Priority: **23.07.81 GB 8122737**

(43) Date of publication of application:
**09.02.83 Bulletin 83/06**

(45) Publication of the grant of the patent:
**18.03.87 Bulletin 87/12**

(84) Designated Contracting States:
**AT BE CH DE FR GB IT LI LU NL SE**

(56) References cited:
**EP-A-0 029 390**
**EP-A-0 033 240**
**WO-A-81/01067**
**FR-A-2 226 903**
**US-A-3 870 814**
**US-A-4 179 743**

(73) Proprietor: **MNEMOS RESEARCH NV**
**c/o Holland Intertrust (Antilles) N.V. De**
**Ruyterkade 58A**
**Curacao Netherlands Antilles (NL)**

(72) Inventor: **Pettigrew, Robert Martin**
**Pound Cottage High Street**
**Foxton Cambridgeshire (GB)**
Inventor: **Bradbrook, John Douglas**
**56 Downlands**
**Royston Hertfordshire (GB)**
Inventor: **Wainwright, Ronald Corbett**
**Chauffeurs Cottage Aston Lane**
**Bragbury End Stevenage Hertfordshire (GB)**

(74) Representative: **Godsill, John Kenneth**
**Hazlitt House 28 Southampton Buildings,**
**Chancery Lane**
**London, WC2A 1AT (GB)**

Courier Press, Leamington Spa, England.

## Description

The present invention relates to optical data storage systems as described in European Patent Application EP—A—0033240 representing the state of the art within the meaning of Article 54(3)EPC.

Prior to such systems, a microfiche system was known which constituted an optical data processing apparatus for processing information storage areas in an optical data storage zone of an optical storage member, the apparatus comprising processing means for use in processing said areas and drive means for producing relative motion between the storage member and the processing means to position the processing means to process any desired one of said areas.

As commonly known, the processing means comprises an imaging system for magnifying an image at one of the areas, and the drive means comprises a 'joy' stick or the like for manually selecting areas for display. U.S. Patent No. 4179743 is another such system, but wherein control data for use in locating areas is distributed amongst the areas, the control data containing classifying data pertaining to the areas and being intrinsically ordered. Such a system can only be used for pre-ordered data such as a dictionary in alphabetical order. Storage space is limited by distributing the control data through the storage zone. No measuring co-ordinate system as such is disclosed for locating data according to its physical position.

The above-mentioned European application describes an optical data storage system wherein an optical data storage member carries its own two-dimensional positional, absolute and incremental, control data in areas distinct from the storage zone in order that a positional servo can accurately position a processing head relative to the storage member. In that application, the processing head is an optical imaging system for image display, but it could equally be an optical imaging system for image recording on sensitive material of the storage member.

The object of the present invention is to dispense with one of the co-ordinate positional sets of incremental data because it has been discovered that sufficient accuracy is achieved from one co-ordinate defined incrementally on the storage member and its second co-ordinate defined incrementally by the processing apparatus itself.

Thus according to one aspect of the invention there is provided an optical data storage apparatus comprising optical reading means for imaging distinct areas of an optical data storage zone of an optical storage member, drive means for producing relative motion between the storage member and the optical reading means to position the optical reading means to image any desired one of said areas, input means to define a desired area of the storage zone, data reading means for reading accessing data in a second zone of the storage means, and control means controlling the drive means to produce said relative motion in dependence upon accessing data read by the data reading means to cause the optical reading means and storage member to be positioned relative to one another to cause the desired area to be imaged, characterised in that the control means are operable to derive from the input means the position of the desired area as its distances from a datum in each of two co-ordinate directions of a two co-ordinate measuring system of the storage member, the control means further being operable to obtain, from the accessing data of the storage member in its second zone distinct from and outside said data storage zone, the datum for each of said directions and to effect control of the drive means to produce said relative motion as increments of motion, relative to the datum, measured by use of an incremental scale of, and extending in one co-ordinate direction of, the storage member and by use of actual value means independent of the storage member for measuring motion in the other co-ordinate direction.

In general terms, the storage member may have as few as three readable points A, B and C to define its own two co-ordinate measuring system, point A providing a datum or 'zero' for the two co-ordinates and the others providing with the first, both the directions, and reference distances, for the respective co-ordinates, i.e. AB is a vector for one co-ordinate and AC a vector for the other. By scanning A, B and C, the co-ordination system can be ascertained and the actual value means calibrated accordingly.

In a preferred embodiment vector AB is simulated by a track or tracks extending in the first co-ordinate direction and providing machine readable absolute and incremental data for the first co-ordinate. A second track extending in the first co-ordinate direction provides vector AC in conjunction with the first track or tracks. Thus, the data reading means can be arranged to read an incremental scale carried by a storage member to define increments of distance in said one co-ordinate direction, there also being means for reading from a storage member a datum for the first and for the second co-ordinate.

In one embodiment a rotary support system is provided for the storage member. Then, said one co-ordinate may be an angular co-ordinate and the data reading means may comprise a reading head for reading an annular track of the storage member substantially co-axial with the centre of rotation.

Preferably, the individual areas contain analogue images and the storage member has a digital control data zone distinct from the information storage zone and containing digital indexing data for indexing the individual areas, i.e. the indexing data comprises classification codes and associated addresses for the storage zone areas.

A consequence of the first aspect of the invention is the feature that the storage members can store more information because positional control areas described in the above mentioned European Application can now be dispensed with and used to store information in a continuous zone unbroken by control data tracks.

Thus according to a second aspect of the invention there is provided an optical data storage member which is a substantially planar member comprising a first, information storage, zone for the storage of information in individual unit areas of the zone which areas can be individually optically imaged, and a second, control, zone or zones which stores machine readable control data for use in accessing the individual unit areas of the first zone, characterised in that, in order to provide random access to any one of a multiplicity of positions of a two-dimensional array of positions within the information storage zone, the storage member has a two-co-ordinate addressing system defined by the second zone or zones and comprising (a) means defining an absolute address of the storage member in one co-ordinate direction and a reference position in the other co-ordinate direction and (b) means providing distance data in one co-ordinate direction for use in measuring travel distances relative to the corresponding datum, the second zone or zones extending substantially co-extensively with one side of the first zone and the first zone being uninterrupted by any positional control data.

The above-mentioned European Application discloses a system for measuring eccentricity in a disc-form storage member, this being equally applicable to a rectangular storage member where corrections for skew may be required. Correction is achieved using stored error values obtained from a pre-scan of a track of the storage member which track extends in one co-ordinate direction. Preferably such correction is included in a system according to the first aspect.

Furthermore, the apparatus may comprise reading means arranged to be driven by the drive means to detect two readable elements spaced apart on the storage member in the direction of the second co-ordinate to provide calibration of the second actual value means.

For a better understanding of the invention and to show how the same may be carried into effect, reference will now be made, by way of example, to the accompanying drawings, in which:

Figure 1 shows a schematic view in plan of a data storage member;

Figure 2 is a view of coded data on the member of Figure 1;

Figure 3 is a perspective view, partially cut-away, of a reader;

Figure 4 is a plan view partially cut-away of the reader;

Figure 5 is a cross-sectional view of a reading head of the reader of Figure 3; and

Figure 6 is a schematic view of a reader for rectangular storage members.

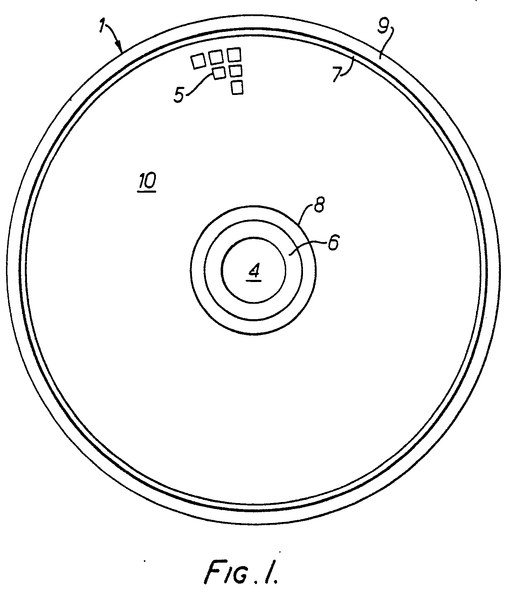

Figures 1 to 6 show an embodiment of an optical data storage system comprising optical data storage members in disc-form and an optical data reader.

Detailed information on construction can be obtained from the above-mentioned Application.

Figure 1 illustrates an example of an optical data storage member 1 in schematic plan.

The member 1 is a transparent laminated thermoplastics (PVC) disc of about 30 cm diameter consisting of two discs of 50 to 100 µm thickness and which are sealed together, e.g. statically- or heat-sealed at their periphery and centre. One disc is embossed on one surface with data as a surface relief pattern, preferably of regular form (e.g. as parallel sets of ridges or as a regular grid or grids of projections) with the ridges or projections amplitude modulated in height. This pattern is protected by the second, transparent, disc.

A hole 4 is provided in the central area of the disc for locating the disc 1 in the data reader. The illustrated disc 1 carries optically displayable information data and also control data. The information data is arranged on the disc 1 in a single zone 10 in substantially rectangular areas 5, each such areas being referred to herein as a 'page' of data. These pages 5 are arranged in concentic circles. In principle, any arrangement of the pages is possible such as spiral, square grid or even random, but an arrangement with concentric circles enables a simpler control system to be provided to locate individual pages.

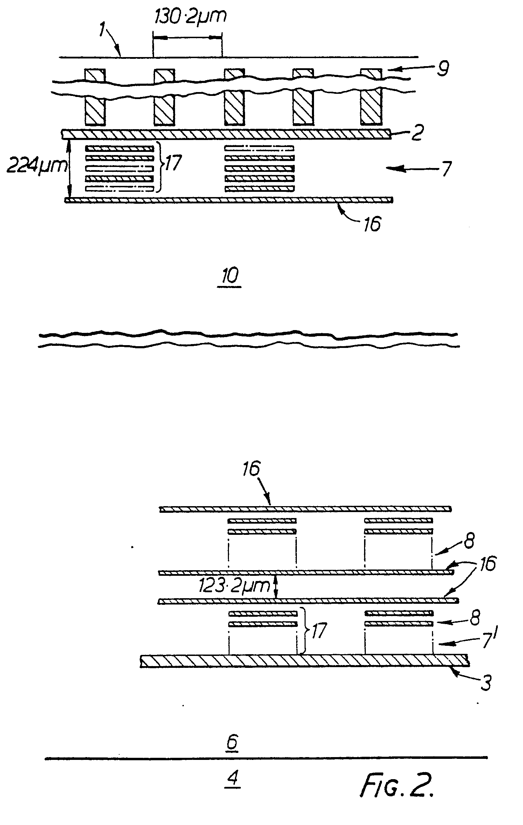

A central annulus 6 of about 5cm radius is left substantially free of data and circumferential tracks 7 and 9 are also provided, these carrying analog and/or digital coded page locating and control data. The control data is intended to be used by positional servos to provide page access. The form of this control data will be described later with reference to Figure 2. A track or tracks 8 of digital data is also shown and will be described later.

The surface relief pattern on the disc is, in this example, in the form of a diffraction grating, also called a carrier frequency grating, modulated by the data to be stored.

Figure 2 is a diagram of the control data tracks in developed form. Each bit of data is hatched in this figure and corresponds to unmodulated grating, the plain areas which are adjacent being 100% modulated, i.e. 'white'. The reverse is also possible when the hatched areas are 'white'.

At the periphery is an incremental, angular position, track 9 consisting of a regular series of bits at a spacing of 130.2 µm and with a width of 2 to 3 µm. A fixed moire fringe transducer will continually monitor this track to provide an incremental angular measure of the travel of the disc 1.

Below track 9 in the figure is the absolute angular position track 7 (an alternative position 7' is shown just above area 6). This track comprises a pair of guard rails 2 & 16, rail 2 being of about 1 mm width and rail 16 being of 5.6 µm

width, between which rails is at least one set 17 of bits, each set being a radially extending bit character comprising 16 data bits and 4 control bits, e.g. providing a check digit. Each set comprises hatched areas representing digital '1' and unhatched areas (shown dotted) representing digital '0'. Preferably, there is one set aligned with each successive pair of bits in track 9. This track therefore defines the absolute angular disc position every 130.2 µm. Circular rails or tracks 2 and 16 serve the purpose of defining the limits of the data and also enable disc eccentricity to be measured. During one complete revolution of the disc the rail 2 can be scanned (identified by its width) and at every $n$th set of bits 17 an eccentricityvalue can be measured and stored to provide eccentricity compensation during servo position control (where $n$ is chosen according to the resolution required).

One or more data tracks 8 are also provided and have the same structure as track 7. The innermost track 8 is bounded by a wide rail 3 similar to rail 2.

It will be apparent that all these bits of Figure 2 could be provided as magnetic or photographically produced markers.

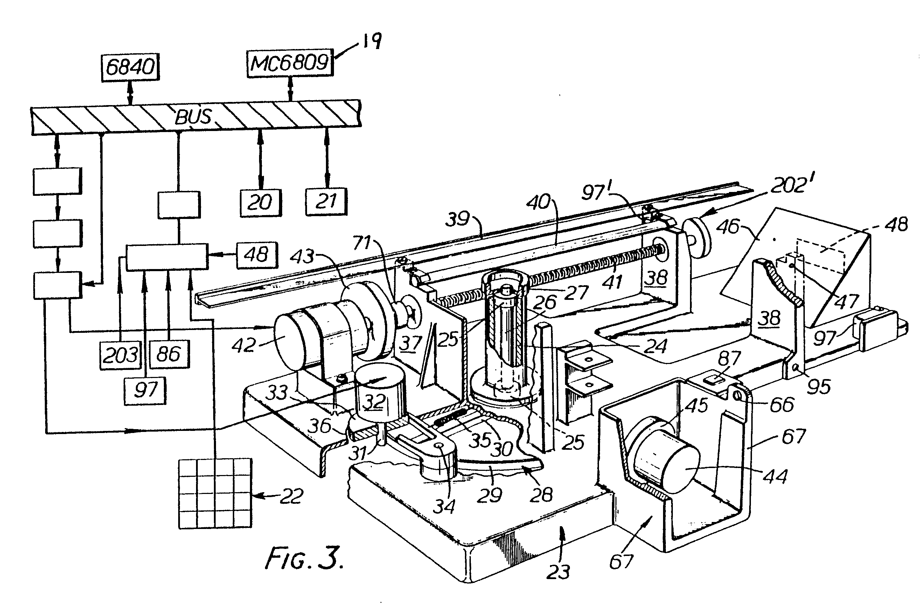

The reader itself will now be described with reference to Figures 3 to 5.

The reader comprises a housing supporting a translucent screen and containing mirrors to project an image from the storage member onto the screen. An aperture is provided for the insertion of discs, and user input means, in the form of a keyboard, are provided for user control. On operating the keyboard, a tray will project from the aperture and a disc will be placed on the tray. Further operation of the keyboard will cause the tray to be pulled back into the reader.

Within the reader is a chassis 23 which will now be described with reference to the partially cutaway view in Figure 3, also showing a diagram of the associated electronic system.

Mounted on this chassis 23 is a vertically extending bearing tube 24 containing bearings 25 rotatably supporting a disc drive shaft 26 carrying at its upper end a cup-shaped member 27 which will engage the underside of a disc. The lower end of shaft 26 carries, below the floor of the chassis 23, a drive wheel 28 comprising a rubber-covered rim 29 supported by a plurality of spokes, one of which is shown at 30. The rim 29 engages the shaft 31 of a DC analog motor 32 having a flywheel 33. This provides a 1:40 coupling between the motor 32 and the drive shaft 26. The motor 32 is pivotally supported about an axis 34 and is biased by a spring 35 to urge the shaft 31 against the rim 29. The flywheel is mounted with clearance in an aperture 36 in the floor of the chassis.

A tranverse wall 37 and two upstanding posts 38 provide four attachment points for various elements now to be described.

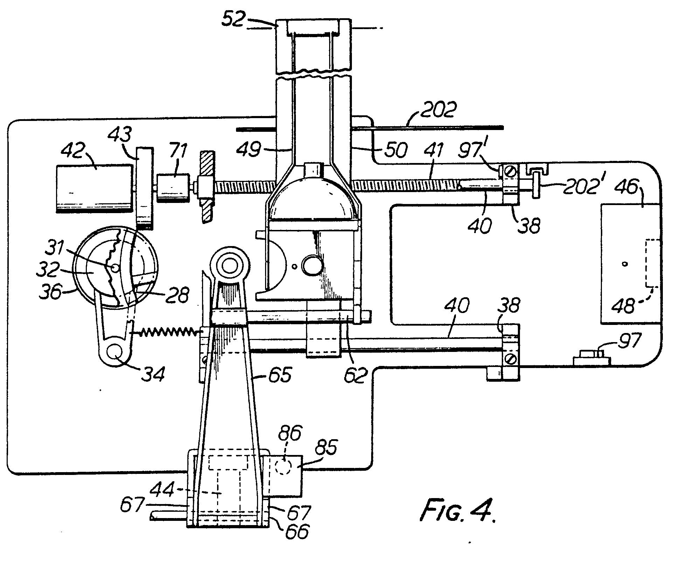

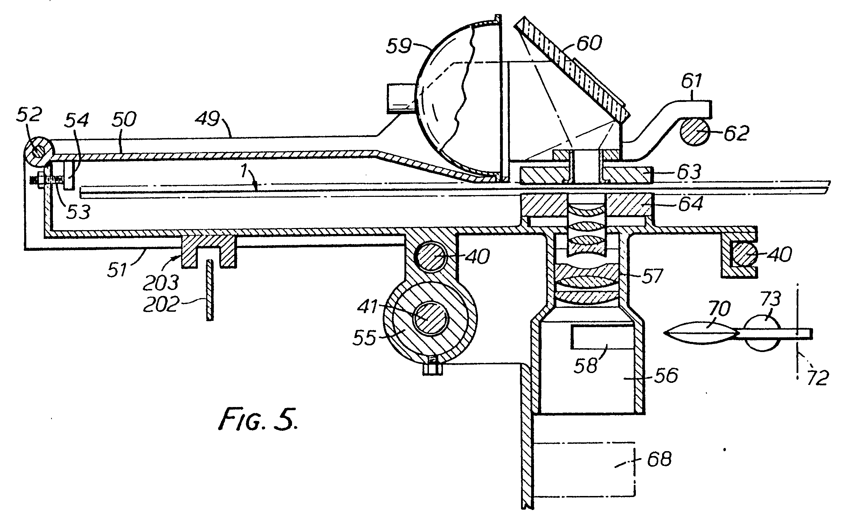

Firstly, the four attachment points support two rails, one of which is shown at 39, these rails providing a guide for the tray mentioned above. The attachment points also support two guide rods, one of which is shown at 40 and which provide guides for a reading head, to be described later. Below the illustrated rod 40 is a lead screw 41 which is rotatably supported by one of the posts 38 and by the wall 37. This lead screw 41 will engage a threaded member attached to the reading head as will be described hereinafter. The lead screw 41 is driven by a DC analog motor 42 having a flywheel 43. An angle encoder 202' can be coupled to the lead screw to measure the movement of the reading head radially. Alternatively linear encoder 202 (Figures 4 and 5) may be employed.

Figure 3 also illustrates a further DC analog motor 44 with flywheel 45 the purpose of which is to act via a cam mechanism to actuate the tray and a disc clamping mechanism.

The chassis also supports a mirror 46 which will reflect images towards a screen. An aperture 47 is provided in the centre of mirror 46 to enable a portion of the light impinging on this mirror to pass through it to a photocell array 48, the purpose of which is to read the digital data in the tracks described above. This array 48 contains 256 individual photocells.

Details of the reader will now be further described with reference to Figures 4 and 5, Figure 4 being a partially cut-away plan view of the chassis shown in Figure 3 and with certain parts removed, and Figure 5 being a cross-sectional view of the reading head.

Figure 4 shows the guide rods 40 and the lead screw 41, all engaging the reading head generally designated 49. It also shows a linear encoder strip 202 read by a reading element 203 (Figure 5) carried by the reading head. The encoder is an alternative to the angle encoder 202'.

The reading head 49 as shown in Figures 4 and 5 comprises two major parts, an upper arm 50 and a lower arm 51. Arm 50 is pivotally supported at 52 to the lower arm 51 and its horizontal orientation can be adjusted by way of a screw 53 which engages a stop 54 projecting from arm 50. The lower arm 51 is engaged by the lead screw 41 in screwthreaded engagement with a back-lash free nut arrangement 55. The rods 40 are also shown, in Figure 5, to be in sliding engagement with the lower arm. The lower arm 51 also carries a tube 56 which contains a set of projection lenses 57 and which also incorporates a slot 58 into which a further lensmay be inserted to alter the optical characteristics of the path, in particular to adapt the magnification of the optical path for scanning the digital data by means of the photocell array 48.

The upper arm 50 supports a light source 59 comprising an ellipsoidal reflector. Illumination from the light source 59 is reflected downwardly by means of a mirror 60, carried by arm 50, through disc 1 to the lenses 57.

An air bearing arrangement comprising air bearing members 63 and 64 is also provided to enable the relatively flexible disc 1 to be stabilised in the area being imaged in order correctly to focus the image relative to the optical system.

The operation of the system will now be described. This operation is fundamentally as described in European Application EP—A—0033240.

A microprocessor 19 includes a memory 20 containing program data which defines the fundamental operation of the reader, and a memory 21 into which data can be fed from a disc. Further details of the microprocessor system of Figure 3 can be obtained from the above-mentioned European application.

Having inserted a disc, the reading head will be displaced to its radially outermost position, detected by a limit switch 97 (Figure 3), whilst the disc is being rotated at constant speed. The head is then displaced until wide rail 2 is detected, in order that the system may scan the track 7. In this condition, data from the photocell array, with decoder, 48 will be received by the microprocessor 19. The width of this array is more than sufficient to encompass the radial width of band 7, so that, within certain limits of eccentricity, the whole of the band can be imaged onto the photocell array. According to the amount of eccentricity at any particular angle, a different set of photocells will have the image of bit sets 17 imaged upon them. The microprocessor will be able to detect which cells, if any, have the guard rails imaged upon them and from this will determine three factors. Firstly, it will determine whether or not both rails are within the range of the array and, if not, will adjust the radial position of the reading head accordingly. Secondly, it will determine the actual value of eccentricity at that given angular position and will store that value in memory 21; alternatively, eccentricity can be measured directly from rail 2. Thirdly, it will be able to ascertain which photocells are in a position corresponding to the positions of the twenty bits of a set 17. These particular photocells will be read by the microprocessor to establish the individual bit values. In particular, if it is ascertained that, say, a known group of eight photocells of the array have a position corresponding to a given bit, then, say, the output from the middle four photocells of that set will be averaged to obtain the bit value. Further angular position measurement can now be effected by way of the transducer 86, 87 reading track 7, because this transducer operates when the reading head is withdrawn away from the track 7.

Radial motion of the reading head will be determined under servo control from encoder 202 or 202'. Initially, such control will be to move the reading head to inner track 8 (detected by detecting rail 3) to read the sets of data bits contained therein in a serial manner. It is to be noted that having detected rails 2 and 3, the distance between them can be measured and stored to calibrate the encoder 202 (202') to compensate for discrepancies between the radial coordinate system of the disc and that implied by the encoder 202 (202'). Returning now to the reading of track 8, a first group of characters or words in track 8 will be read into the microprocessor system so that the system may ascertain the type of disc, in particular whether or not any index track is provided, whether or not any programming track is provided and whether or not there is any "title" or "menu" page to be accessed initially. It is pointed out here that one or more tracks 8 may be provided with program data which defines the manner in which the reader should respond to data indexing information, and such programming information will be read into memory for subsequent use during reading of the disc.

If the data read from the track or tracks 8 defines an initial page to be displayed, the microprocessor will calculate the address co-ordinates of the page and drive the disc under servo control using data from encoder 202 (or 202') and data from track 9 to obtain actual value data. It is noted that when this stage has been reached, the reading head will have been set to image the page to be displayed, so the microprocessor system will have ceased reading data from the photocell array 48, and will have withdrawn lens 70 to enable that page to be displayed by way of the optical system. Thus, radial and angular servo control positioning is under control of the transducer 86, 87 and encoder 202 (202') in conjunction with the motors 42 and 32.

In one scheme, the individual pages have page numbers running from, say, 1 to 9000 and the operator may input that page number to access the corresponding page. The microprocessor will decode that page number into a corresponding radial co-ordinate value and angular co-ordinate value for page searching in the manner briefly described above.

An alternative method of access is *via* indexing, as described above.

A further function implemented by the microprocessor is a focussing adjustment to compensate for focussing differences between reading track 7 and tracks 8 at different radii, when the difference in optical path length to array 48 would provide a badly focussed image at array 48 at some radii. The disc is supported out of contact with moving parts by an air bearing with an adjustable air pressure. Accordingly, during reading by array 48, the microprocessor adjusts the air pressure according to the radial position of head 49.

An alternative method is to provide a different optical path for array 48. In this case solenoid 73 will put into the path a weakly negative lens and a mirror, the mirror directing light to an arrangement mounted on the chassis and comprising lens 70 and array 48 a fixed distance apart. The negative lens will provide compensation for the variations in distance between it and lenses 57 as the head moves radially.

It has been indicated above that a digital track 8 could be provided so as to contain indexing information. Moreover digital programming information can be stored to provide the reader with software particularly adapted to handle the indexing data that is provided on the same disc. In this way a variety of types of indexes can be made compatible with a single embodiment of disc reader by having the reader effectively reprogrammed in part each time a disc is loaded.

All this may be as described in the abovementioned copending Applications.

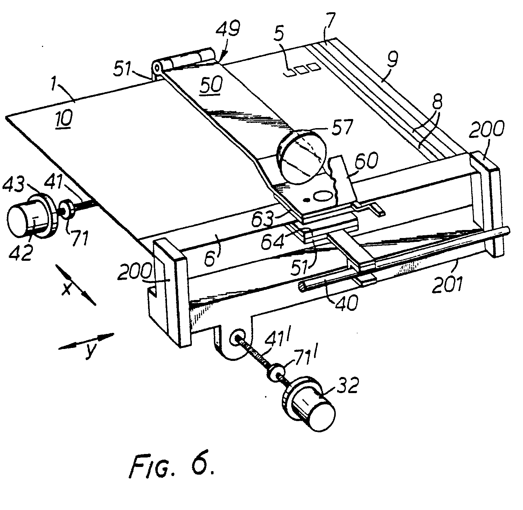

Finally, Figure 6 illustrates schematically a modification in which an x,y (orthogonal) co-ordinate system is used for a reader or recorder.

Where elements of Figure 6 correspond to elements in the embodiment described above, the same reference numerals are used.

In this embodiment, the storage member is a planar, rectangular, sheet 1 having x, y axes, position in the y co-ordinates being given absolutely by digital track 9. Adjacent track 9 are a linear incremental y track 7 and digital data tracks 8. The sheet 1 contains a single information storage zone 10 containing 'pages' 5 of analog information. A strip 6 is left free of data to provide a clamping zone. Strip 6 is releasably clamped at two points by elements 200 carried by a carriage 201 slidably movable in the x direction. Carriage 20' is engaged by lead screw 41' driven, *via* universal joint 71', by motor 32.

Reading head 49 is precisely as shown in Figures 4 and 5, except that no semicircular cutout is required to accommodate the central support of a disc. Thus, air bearings 63, 64, source 59, mirror 60 and all other items as shown in Figure 5 are provided. Lead screw 41 again is coupled to motor 42 by universal joint 71 and flywheel 43. Electronic and optical system remains as shown in preceding figures.

In a further embodiment of reading apparatus, head 49 is pivotally mounted about a vertical axis, motor 42 then driving the vertical optical axis through lenses 57 along an arcuate path. The existing co-ordinate system could nevertheless be maintained. However, another possibility in that case is to replace the radial (or y-)·co-ordinate by an arcuate co-ordinate having a component in the radial (or y-) direction.

With regard to eccentricity or skew correction in a reading apparatus, a smaller array 48 can be used if radial (or y-) motion is effected always to align the array with the track 7. A number of eccentricity readings can be taken at different angular (or x-) positions, the eccentricity being measured by the particular photocells on which the control track 7 is imaged in combination with a radial motion required to position the track in the field of view of the array 48.

Further, whatever means are employed to measure eccentricity or skew, a correction is preferred, in dependence upon that error, in both co-ordinate directions not just in the direction used in measuring the error, i.e. angular and radial address correction is required in the case of an eccentric disc. Thus, the microprocessor includes software designed to take this factor into account.

One method of correcting for eccentricity or skew errors is to provide on the optical storage member an outer datum and an inner datum which are located on a common radius, the inner datum preferably being close to the centre of the member and the outer datum preferably being close to the periphery thereof. In the present embodiment, these datum are the two wide rails 2 and 3 (Figure 2). If the storage member were properly shaped and positioned in the apparatus, the two data would be at predetermined locations. Thus compensation can be achieved by observing the inner datum and the outer datum; comparing the observed positions with the predetermined positions equivalent to perfect shape and positioning of the member; and deriving therefrom (by interpolation or, less preferably, extra-polation) correction functions for all parts of the optical storage member. Thus isotropic and anisotropic errors can be corrected.

**Claims**

1. An optical data storage apparatus comprising optical reading means (56 to 60) for imaging distinct areas (5) of an optical data storage zone (10) of an optical storage member (1), drive means (32, 42) for producing relative motion between the storage member (1) and the optical reading means (56 to 60) to position the optical reading means to image any desired one of said areas (5), input means (22) to define a desired area (5) of the storage zone (10), data reading means (49, 86) for reading accessing data in a second zone (7, 9) of the storage means, and control means (19) controlling the drive means to produce said relative motion in dependence upon accessing data read by the data reading means to cause the optical reading means and storage member to be positioned relative to one another to cause the desired area (5) to be imaged, characterised in that the control means (19) are operable to derive from the input means the position of the desired area as its distances from a datum in each of two co-ordinate directions of a two co-ordinate measuring system of the storage member, the control means further being operable to obtain, from the accessing data of the storage member in its second zone distinct from and .outside said data storage zone (10), the datum for each of said directions and to effect control of the drive means to produce said relative motion as increments of motion, relative to the datum, measured by use of an incremental scale of, and extending in one co-ordinate direction of, the storage member and by use of actual value means (202, 203) independent of the storage member for measuring motion in the other co-ordinate direction.

2. Apparatus according to Claim 1, wherein the drive means (32, 42) are operable to produce relative rotational motion between the storage member (1) and the optical reading means (56 to 60).

3. Apparatus according to Claim 2, wherein the co-ordinates are polar co-ordinates.

4. Apparatus according to Claim 3, wherein said one co-ordinate is an angular co-ordinate and the data reading means comprises a reading head (86) for reading as incremental scale in an annular track which is on the storage member and is substantially co-axial with the centre of rotation.

5. Apparatus according to any one of the preceding claims, wherein the data reading means comprises means (49, 48) for reading an absolute value track (7) of the storage member defining at least one absolute position value for the one co-ordinate.

6. Apparatus according to any one of the preceding claims wherein the data reading means comprises means (48, 49) for reading a track (2) of the storage member (1) extending in the direction of the one co-ordinate and defining a datum for the second co-ordinate.

7. Apparatus according to any one of the preceding claims and comprising data reading means (49, 48) arranged to be driven by the drive means for effecting a scan of a track (2) of the storage member extending in the one co-ordinate direction to ascertain any error between said direction of the storage member and the corresponding direction defined by the drive means to produce error compensation during operation of the control and drive means.

8. Apparatus according to any one of the preceding claims and comprising data reading means (49, 48) arranged to be driven by the drive means to detect two readable elements (2, 3) spaced apart on the storage member in the direction of the second co-ordinate to provide calibration of the independent actual value means (202, 203).

9. Apparatus according to any one of the preceding claims, and comprising desired value means comprising data reading means (49, 48) for reading a digital data zone (8) distinct from the storage zone (10) of a storage member, to read therefrom indexing data including addresses providing the values for said distances of the desired area.

10. Apparatus according to any one of Claims 5 to 9, wherein the data reading means (49, 48) comprises an input portion (59, 60, 57) arranged to be moved relative to the storage member, the input portion being carried for movement with the optical reading means (56 to 60).

11. Apparatus according to Claim 10, wherein the input portion comprises an optical portion of the optical reading means (56 to 60).

12. An optical data storage member suitable to the optical data storage apparatus according to claim 1, which is a substantially planar member (1) comprising a first, information storage, zone (10) for the storage of information in individual unit areas of the zone which areas can be individually optically imaged, and a second, control, zone or zones (7, 8, 9) which stores machine readable control data for use in accessing the individual unit areas of the first zone, characterised in that, in order to provide random access to any one of a multiplicity of positions of a two-dimensional array of positions within the information storage zone (10), the storage member has a two-co-ordinate addressing system defined by the second zone or zones and comprising (a) means (7) defining an absolute address of the storage member in both of the co-ordinate directions and (b) means (9) providing distance data in one of the co-ordinate directions for use in measuring travel distances relative to the corresponding datum, the second zone or zones extending substantially co-extensively with one side of the first zone and the first zone being uninterrupted by any positional control data.

13. A storage member according to Claim 12, wherein said providing means of a second zone or zones comprises a control track (9) extending in the one co-ordinate direction of the measuring system and providing an incremental scale for use in measuring incremental travel distances relative to the corresponding datum independently of the position and content of any data within said first zone.

14. A member according to Claim 13, wherein the first zone (10) comprises a plurality of individually imagable areas of information, with the areas arranged in a two-dimensional array.

15. A storage member according to Claim 12, 13 or 14, and comprising means (2, 3) defining a dimension in the second co-ordinate direction.

16. A storage member according to Claim 15 wherein the defining means (2, 3) comprise two, spaced, bands or tracks extending in the one co-ordinate direction.

17. A storage member according to Claim 16, wherein said two bands or tracks are on respective sides of the first zone.

18. A storage member according to any one of Claims 12 to 17, wherein the second zone or zones define a polar co-ordinate measuring system.

19. A storage member according to Claim 18, when appended to Claim 13, and comprising an outer, annular, second zone containing said control track, defining an incremental scale, and an absolute address track defining a plurality of machine readable absolute angular addresses, the first zone being an annular zone encircled by said outer second zone.

20. A storage member according to any one of Claims 12 to 19 and comprising a digital data track (8) which is an indexing track comprising indexing data providing addresses of corresponding positions within the first zone (10).

21. A storage member according to Claim 20, wherein the first zone encircles the digital track.

**Patentansprüche**

1. Optisches Datenspeicher-Gerät mit einer optischen Leseeinrichtung (56 bis 60) zum Abbilden voneinander getrennter Flächen (5) eines optischen Datenspeicherbereichs (10) eines optischen Speicherelements (1), einer Antriebseinrichtung (32, 42) zum Erzeugen einer relativen Bewegung zwischen dem Speicherelement (1) und der optischen Leseeinrichtung (56 bis 60), um die optische Leseeinrichtung zu positionieren, um auf diese Weise eine beliebig gewünschte der Flächen (5) abzubilden, einer Eingabevorrichtung (22) zum Definieren einer gewünschten Fläche (5) des Speicherbereichs (10), Datenauslesemitteln (49, 86) zum Auslesen von Zugriffsdaten aus einem zweiten Bereich (7, 9) des Speicherelements und einem Steuermittel (19), das die Antriebseinrichtung steuert, um die relative Bewegung in Abhängigkeit von den Zugriffsdaten zu erzeugen, die durch die Datenauslesemittel ausgelesen werden, um die optische Leseeinrichtung und das Speicherelement zu veranlassen, sich relativ zueinander zu positionieren, um zu bewirken, daß die gewünschte Fläche (5) abgebildet wird,

dadurch gekennzeichnet, daß das Steuermittel (19) derart betreibbar ist, daß es von der Eingabevorrichtung die Position der gewünschten Fläche als deren Distanzen von einer gegebenen Größe in jeder von zwei Koordinatenrichtungen eines Zweikoordinaten-Meßsystems des Speicherelements gewinnen kann, und daß das Steuermittel desweiteren derart betreibbar ist, daß es aus den Zugriffsdaten des Speicherelements in dessen zweitem Bereich, der von dem Datenspeicherbereich (10) getrennt ist und außerhalb desselben liegt, die vorgegebene Größe für jede der Richtungen gewinnt und die Steuerung der Antriebseinrichtung bewirkt, um die relative Bewegung als Inkremente der Bewegung relativ zu der vorgegebenen Größe zu erzeugen, die durch Benutzung einer Feinverstellungsskala des Speicherelements, die sich in einer Koordinatenrichtung desselben erstreckt, und durch Benutzung von Istwertmitteln (202, 203) zum Messen der Bewegung in der anderen Koordinatenrichtung, die unabhängig von dem Speicherelement sind, gemessen wird.

2. Gerät nach Anspruch 1, bei dem die Antriebseinrichtung (32, 42) derart betreibbar ist, daß sie eine relative Drehbewegung zwischen dem Speicherelement (1) und der optischen Leseeinrichtung (56 bis 60) erzeugt.

3. Gerät nach Anspruch 2, bei dem die Koordinaten Polarkoordinaten sind.

4. Gerät nach Anspruch 3, bei dem die eine Koordinate eine Winkelkoordinate ist und die Datenausleseeinrichtung einen Lesekopf (86) zum Auslesen derselben als eine Zuwachsskala in einer kreisförmigen Spur enthält, die sich auf dem Speicherelement befindet und im wesentlichen koaxial mit dem Rotationszentrum angeordnet ist.

5. Gerät nach einem der vorhergehenden Ansprüche, bei dem die Datenausleseeinrichtung Mittel (49, 48) zum Auslessen einer Absolutwertspur (7) des Speicherelements enthält, die zumindest einen Absolutpositionswert der einen Koordinate definiert.

6. Gerät nach einem der vorhergehenden Ansprüche, bei dem die Datenausleseeinrichtung Mittel (48, 49) zum Auslesen einer Spur (2) des Speicherelements (1) enthält, die sich in Richtung der einen Koordinate erstreckt und eine gegebene Größe für die zweite Koordinate definiert.

7. Gerät nach einem der vorhergehenden Ansprüche und mit Datenauslesemitteln (49, 48), die derart angeordnet sind, daß sie durch die Antriebseinrichtung zum Bewirken einer Abtastung einer Spur (2) des Speicherelements angetrieben werden, die sich in der einen Koordinaten-Richtung des Speicherelements erstreckt, um jegliche Abweichung zwischen der Richtung des Speicherelements und der korrespondierenden Richtung, die durch das Antriebsmittel definiert wird, festzustellen, um eine Fehlerkompensation während des Betriebs der Steuer- und Antriebsmittel zu bewirken.

8. Gerät nach einem der vorhergehenden Ansprüche und mit Datenauslesemitteln (49, 48), die derart angeordnet sind, daß sie durch die Antriebseinrichtung angetrieben werden, um zwei auslesbare Elemente (2, 3), die auf dem Speicherelement einen Abstand in der Richtung der zweiten Koordinate voneinander aufweisen, zu erfassen, um einen Kalibrierung der unabhängigen Istwertmittel (202, 203) zu erreichen.

9. Gerät nach einem der vorhergehenden Ansprüche und mit Auswahlwert-Erzeugungsmitteln, die Datenauslesemittel (49, 48) zum Auslesen eines Digitaldatenbereichs (8), der von dem Datenspeicherbereich (10) eines Speicherelements getrennt ist, enthalten, zum Auslesen von Indexdaten daraus, die Adressen enthalten, welche die Werte für die Distanzen der gewünschten Fläche erzeugen.

10. Gerät nach einem der Ansprüche 5 bis 9, bei dem die Datenausleseeinrichtung (49, 48) einen Eingabeteil (59, 60, 57) enthält, der derart angeordnet ist, daß er relativ zu dem Speicherelement bewegt wird, wobei der Eingabeteil für die Bewegung mit der optischen Ausleseeinrichtung 56 bis 60 geführt wird.

11. Gerät nach Anspruch 10, bei dem der Eingabeteil einen optischen Abschnitt der optischen Ausleseeinrichtung (56 bis 60) enthält.

12. Optisches Daten-Speicherelement, das für das optische Datenspeicher-Gerät nach Anspruch 1 geeignet ist und das ein im wesentlichen planares Teil (1) ist, mit einem ersten Informations-Speicherbereich (10) zum Speichern von Information in individuellen Flächeneinheiten des Bereichs, welche Flächen individuell optisch abgebildet werden können, und einen zweiten Steuerbereich oder Bereichen (7, 8, 9), der oder die maschinenlesbare Steuerdaten zur Verwendung beim Zugreifen auf die individuellen Flächeneinheiten des ersten Bereichs enthält oder enthalten, dadurch gekennzeichnet, daß um einen wahlfreien Zugriff auf eine beliebige aus der Vielzahl von Positionen eines zweidimensionalen Feldes von Positionen innerhalb des Informations-Speicherbereichs (10) zu ermöglichen, das Speicherelement ein Zweikoordinaten-Adressiersystem aufweist, das durch den zweiten Bereich oder die zweiten Bereiche definiert ist und (a) ein Mittel (7), welches eine absolute Adresse des Speicherelements in beiden der Koordinatenrichtungen definiert, sowie (b) ein Mittel (9), das Distanzdaten in einer der Koordinatenrichtungen zur Verwendung beim Messen von Bewegungsdistanzen relativ zu der korrespondierenden gegebenen Größe enthält, und daß sich der zweite Bereich oder die zweiten Bereiche im wesentlichen gemeinsam mit einer Seite des ersten Bereichs erstreckt oder erstrecken und der erste Bereich durch keinerlei Positionssteuerdaten unterbrochen ist.

13. Speicherelement nach Anspruch 12, bei dem die Mittel des zweiten Bereichs oder der zweiten Bereiche eine Steuerspur (9) enthalten, die sich in einer Koordinatenrichtung des Meßsystem erstreckt und eine Zuwachsskala zur Verwendung beim Messen der wachsenden Bewegungsdistanzen relative zu der korrespondierenden gegebenen Größe unabhängig von der Position und dem Inhalt beliebiger Daten innerhalb des ersten Bereichs zur Verfügung stellt.

14. Speicherelement nach Anspruch 13, bei dem der erste Bereich (10) eine Vielzahl von individuell abbildbaren Informationsflächen enthält, wobei die Flächen in einem zweidimensionalen Feld angeordnet sind.

15. Speicherelement nach Anspruch 12, 13 oder 14, mit Mitteln (2, 3), die eine Größe in der zweiten Koordinatenrichtung definieren.

16. Speicherelement nach Anspruch 15, bei dem die Mittel (2, 3) zum Definieren aus zwei einen Abstand voneinander aufweisenden Bändern oder Spuren bestehen, die sich in der einen Koordinatenrichtung erstrecken.

17. Speicherelement nach Anspruch 16, bei dem die zwei Bänder oder Spuren auf verschiedenen Seiten des ersten Bereichs liegen.

18. Speicherelement nach einem der Ansprüche 12 bis 17, bei dem der zweite Bereich oder die zweiten Bereiche ein Polarkoordinaten-Meßsystem definiert oder definieren.

19. Speicherelement nach Anspruch 18, wenn dieser auf Anspruch 13 rückbezogen ist, mit einem äußeren ringförmigen zweiten Bereich, der die Steuerspur, die eine Zuwachsskala definiert, und eine Absolutadressenspur, die eine Vielzahl von maschinenlesbaren Absolutwinkeladressen definiert, enthält, wobei der erste Bereich ein ringförmiger Bereich ist, der von dem äußeren zweiten Bereich umgeben ist.

20. Speicherelement nach einem der Ansprüche 12 bis 19, mit einer Digitaldatenspur (8), die eine Indexspur ist, welche Indexdaten enthält, die Adressen von korrespondierenden Positionen innerhalb des ersten Bereichs (10) liefern.

21. Speicherelement nach Anspruch 20, bei dem der erste Bereich die Digitaldatenspur umgibt.

**Revendications**

1. Un appareil de stockage d'informations optiques comprenant des moyens de lecture optique (56 à 60) permettant d'impressionner des surfaces distinctes (5) d'une zone de stockage (10) d'informations optiques d'un élément de stockage optique (1), des moyens d'entraînement (32,42) permettant de produire un mouvement relatif entre l'élément de stockage (1) et les moyens de lecture optique (56 à 60) pour mettre en place les moyens de lecture optique afin d'impressionner une surface quelconque désirée parmi lesdites surfaces (5), des moyens d'entrée (22) pour définir une surface désirée (5) de la zone de stockage (10), des moyens de lecture d'informations (49,86) permettant de lire des informations accessibles dans une seconde zone (7,9) des moyens de stockage, et des moyens de commande (19) commandant les moyens d'entraînement afin de produire ledit mouvement relatif en dépendance des informations accessibles lues par les moyens de lecture d'informations afin de faire que les moyens de lecture optique et l'élément de stockage soient placés l'un par rapport à l'autre pour faire en sorte que la surface désirée (5) soit impressionnée, caractérisé en ce que les moyens de commande (19) fonctionne pour faire dériver, à partir des moyens d'entrée, la position de la surface désirée sous la forme de ses distances à partir d'une information dans chacune des deux directions de coordonnées d'un système de mesure à deux coordonnées de l'élément de stockage, les moyens de commande pouvant en outre fonctionner pour obtenir, à partir des données accessible de l'élément de stockage dans sa second zone distincte de ladite zone (10) de stockage d'informations et extérieure à cette dernière l'information pour chacune desdites directions et pour effectuer une commande des moyens d'entraînement afin de produire ledit mouvement relatif sous la forme d'incréments de mouvement, par rapport à l'information, mesurés en utilisant une échelle à incréments de l'élément de stockage, et s'étendant dans une première direction de coordonnée de cette dernière, et par l'utilisation de moyens de valeurs réelles (202, 203) indépendants de l'élément de stockage pour mesurer le mouvement dans l'autre direction de coordonnée.

2. Appareil selon la revendication 1, dans lequel les moyens de commande (32, 42) fonctionnent pour produire un mouvement de rotation relatif entre l'élément de stockage (1) et les moyens de lecture optique (56 à 60).

3. Appareil selon la revendication 2, dans lequel les coordonnées sont des coordonnées polaires.

4. Appareil selon la revendication 3, dans lequel ladite première coordonnée est une coordonnée angulaire et les moyens de lecture des informations comprennent une tête de lecture (86) permettant de lire une échelle à incréments dans une piste annulaire qui se trouve sur l'élément de stockage et est sensiblement co-axiale au centre de rotation.

5. Appareil selon l'une quelconque des revendications précédentes, dans lequel les moyens de lecture des informations comprennent des moyens (49, 48) pour lire une piste de valeur absolue (7) de l'élément de stockage en définissant au moins une valeur de position absolue pour la première coordonnée.

6. Appareil selon l'une quelconque des revendications précédentes dans lequel les moyens de lecture des informations comprennent des moyens (48, 49) pour lire une piste (2) de l'élément de stockage (1) s'étendant dans la direction de la première coordonnée et définissant une information pour la seconde coordonnée.

7. Appareil selon l'une quelconque des revendications précédentes et comprenant des moyens de lecture d'informations (49, 48) prévus pour être entraînés par les moyens d'entraînement afin d'effectuer un balayage d'une piste (2) de l'élément de stockage s'étendant dans la direction de la première coordonnée pour se rendre compte de toute erreur entre ladite direction de l'élément de stockage et la direction correspondante définie par les moyens d'entraînement afin de produire une compensation d'erreur pendant le fonctionnement des moyens de commande et d'entraînement.

8. Appareil selon l'une quelconque des revendications précédentes et comprenant des moyens de lecture d'informations (49, 48) prévus pour être entraînés par les moyens d'entraînement afin de détecter deux éléments lisibles (2, 3) écartés l'un de l'autre sur l'élément de stockage dans la direction de la seconde coordonnée afin d'assurer un calibrage des moyens de valeurs réelles indépendantes (202, 203).

9. Appareil selon l'une quelconque des revendications précédentes, et comprenant des moyens de valeurs désirées comportant des moyens de lecture d'informations (49, 48) permettant de lire une zone d'information numérique (8) distincte de la zone de stockage (10) d'un élément de stockage, afin de lire depuis celle-ci des informations d'indexage incluant des adresses fournissant les valeurs pour lesdites distances de la surface désirée.

10. Appareil selon l'une quelconque des revendications 5 à 9, dans lequel les moyens de lecture d'informations (49, 48) comprennent une partie d'entrée (59,60,57) prévue pour être déplacée par rapport à l'élément de stockage, la partie d'entrée étant portée pour se déplacer avec les moyens de lecture optique (56 à 60).

11. Appareil selon la revendication 10, dans lequel la partie d'entrée comprend une partie optique des moyens de lecture optique (56 à 60).

12. Un élément de stockage d'informations optiques approprié à l'appareil de stockage d'informations optiques selon la revendication 1, qui est un élément sensiblement plan (1) comprenant une première zone de stockage d'informations (10) pour le stockage d'informations dans des surfaces d'unités individuelles de la zone, ces surfaces pouvant être impressionnées optiquement de manière individuelle, et une seconde zone ou de secondes zones de commande (7, 8, 9) qui stockent des informations de commande lisibles par la machine afin d'être utilisées dans l'accession des surfaces d'unité individuelles de la première zone, caractérisé en ce que, de manière à assurer un accès aléatoire à l'une quelconque d'un ensemble de positions d'un réseau bi-dimensionnel de positions à l'intérieur de la zone de stockage d'informations (10), l'élément de stockage présente un système d'adressage à deux coordonnées défini par la seconde zone ou les seconde zones et comprenant (a) des moyens (7) définissant une adresse absolue de l'élément de stockage dans les deux directions de coordonnées et (b) des moyens (9) fournissant des informations de distance dans une première des directions de coordonnées pour être utilisées dans la mesure des distances de déplacement par rapport à l'information correspondante, la seconde zone ou les secondes zones s'étendant de manière sensiblement co-extensive avec un côté de la première zone et la première zone n'étant pas interrompue par de quelconques informations de commande en position.

13. Un élément de stockage selon la revendication 12, dans lequel lesdits moyens de fourniture de la seconde zone ou des secondes zones comprennent une piste de commande (9) s'étendant dans la première direction de coordonnée du système de mesure et fournissant une échelle à incréments pour être utilisée dans la mesure des distances de déplacement à incréments par rapport à l'information correspondante indépendamment de la position et du contenu de toute information à l'intérieur de ladite première zone.

14. Un élément selon la revendication 13, dans lequel la première zone (10) comprend un ensemble de surfaces d'informations pouvant être individuellement impressionnées, ces surfaces étant disposées selon un réseau bi-dimensionnel.

15. Un élément de stockage selon la revendication 12, 13 ou 14, et comprenant des moyens (2,3) définissant une dimension dans la seconde direction de coordonnées.

16. Un élément de stockage selon la revendication 15, dans lequel les moyens de définition (2,3) comprennent deux bandes ou pistes espacées s'étendant dans la première direction de coordonnées.

17. Un élément de stockage selon la revendication 16, dans lequel lesdites deux bandes ou pistes sont sur les côtés respectifs de la première zone.

18. Un élément de stockage selon l'une quelconque des revendications 12 à 17, dans lequel la seconde zone ou les secondes zones définissent un système de mesure de coordonnées polaires.

19. Un élément de stockage selon la revendication 18, lorsqu'elle dépend de la revendication 13, et comprenant une seconde zone annulaire externe contenant ladite piste de commande, en définissant une échelle à incréments, et une piste d'adresse absolue définissant un ensemble d'adresse angulaire absolue lisible par la machine, la première zone étant une zone annulaire entourée par ladite seconde zone extérieure.

20. Un élément de stockage selon l'une quelconque des revendications 12 à 19, et comprenant une piste d'informations numériques (8) qui est une piste d'indexage comprenant des données d'indexage fournissant les adresses de positions correspondantes à l'intérieur de la première zone (10).

21. Un élément de stockage selon la revendication 20, dans lequel la première entoure la piste numérique.

FIG.I.

Fig. 2.

Fig. 3.

*FIG. 4.*

FIG. 5.

FIG. 6.